# EUROPÄISCHE PATENTSCHRIFT

(11) **EP 2 561 971 B1**
(45) Veröffentlichungstag und Bekanntmachung des Hinweises auf die Patenterteilung: **26.08.2015**
(21) Anmeldenummer: 12193103.4
(22) Anmeldetag: 21.06.2005
(51) Int. Cl.: B29C 45/18, B29C 45/54, B29C 45/63, B29C 47/76, B29C 47/10

(54) **Verfahren und Vorrichtung zur Herstellung von Spritzgußteilen**
Method and device for producing injection moulded parts
Procédé et dispositif destinés à la fabrication de pièces moulées par injection

(30) Priorität: 27.08.2004 DE 102004041689
(43) Veröffentlichungstag der Anmeldung: 27.02.2013
(62) Teilanmeldung aus: 05756835.4
(73) Patentinhaber: KraussMaffei Technologies GmbH, 80997 München (DE); KraussMaffei Berstorff GmbH, 30625 Hannover (DE)
(72) Erfinder: Sieverding, Matthias, Fort Thomas, KY Kentucky 41075 (US); Fischbach, Gunther, 80997 München (DE); Liebhold, Jens, 82166 Gräfelfing (DE); Berndt, Markus, 67549 Worms (DE); Zimmet, Rainer, 74382 Neckarwestheim (DE)
(74) Vertreter: Wilhelm, Ludwig

(56) Entgegenhaltungen:
- WO-A1-2005/053931
- DE-A1- 10 156 522
- US-A1- 2003 015 814
- WOBBE H ET AL: "SPRITZGIESSEN INKLUSIVE COMPOUDIEREN INJECTION MOULDING THAT INCLUDES COMPOUNDING", KUNSTOFFE INTERNATIONAL, CARL HANSER VERLAG, MUNCHEN, DE, Bd. 88, Nr. 10, 1. Oktober 1998 (1998-10-01), XP000935460, ISSN: 0023-5563

## Beschreibung

Die Erfindung betrifft ein Verfahren und eine Vorrichtung zur Herstellung von PET-Preforms, mit einem Doppelschnecken-Extruder zur Aufbereitung und/oder Plastifizierung von vorzugsweise in Granulatform befindlichem PET-Material, mit einem Transferspeicher zur Aufnahme von aufbereitetem und/oder plastifiziertem PET-Material und mit einem Kolbenaggregat zum Weiterverarbeiten des Materials, wobei der Extruder mindestens zwei Prozesszonen aufweist.

Aus der WO-A-92/00838 ist eine Vorrichtung zur Herstellung von Spritzgussteilen bekannt, wobei ein Extruder zur Aufbereitung und/oder Plastifizierung von vorzugsweise in Granulatform befindlichem Material eingesetzt wird, wobei ein Transferspeicher zur Aufnahme von aufbereitetem und/oder plastifiziertem Material verwendet wird und wobei ein Kolbenaggregat zum Weiterverarbeiten des Materials vorgesehen ist.

Bei der Herstellung von PET-Preforms im Spritzgießverfahren werden im Allgemeinen Einschneckenextruder zum Plastifizieren von Materialen, insbesondere von Kunststoffgranulaten, eingesetzt. Das plastifizierte Material wird zur Weiterverarbeitung mit einem Kolbenaggregat - Shot-Pot - verspritzt oder direkt mit einer axial verschiebbaren Schnecke eingespritzt. Da PET hygroskopisch ist und gebundene Feuchtigkeit hydrolytischen Polymerkettenabbau verursacht, wird das Material, insbesondere wenn es in Granulatform vorliegt, aufwendigst vorgetrocknet.

Bei der Vortrocknung wird elektrisch oder mit Gasbrennern erwärmte Luft in einem großvolumigen, isolierten Vorratsbehälter eingebracht. Dabei wird das Material entfeuchtet und erfährt eine Temperaturerhöhung. Bei dieser Einschneckenplastifizierung mit Vortrocknung ist der Energiebedarf gegenüber der Temperaturerhöhung des Materials deutlich erhöht, in der Regel 0,55 kWh/kg. Darüber hinaus benötigen die Trocknungsanlagen erheblichen Bauraum, der zu einer beträchtlichen Vergrößerung der Vorrichtung zur Herstellung von Spritzgussteilen in vertikaler Richtung führt.

Ferner ist es bekannt, das Material, insbesondere PET-Granulat und Recyclat mit einem unterfütterten Doppelschneckenextruder ungetrocknet bei Anwendung geeigneter Verfahrensteile und einer geeigneten Vakuumextraktion zu Folien und Fasern zu verarbeiten. Beispielhaft wird auf die EP 1 226 922 A1 verwiesen. Eine solche Methode der Plastifizierung ohne Vortrocknung kann allerdings in bestimmten Gebieten, wie beispielsweise PET-Preforms, nicht angewendet werden, da Bedenken bezüglich des hydrolytischen Abbaus und der möglichen Erhöhung des Acetaldehyd-Gehalts - AA-Gehalts - in der Schmelze bestehen. Ein niedriger AA-Gehalt ist jedoch ein wichtiges Leistungsmerkmal von Preform-Anlagen, da die überwiegende Mehrzahl der produzierten Preforms zur Abfüllung von Wasser und CSDs - Carbonated Soft Drinks - eingesetzt wird. Ein hoher AA-Gehalt wirkt sich dabei störend auf den Geschmack der Getränken aus.

Das Dokument WO2005/053931A1, welche als Stand der Technik gemäß Artikel 54(3) EPÜ zu berücksichtigen ist, offenbart eine Spritzgießanlage zur Herstellung von PET-Preforms unter Verwendung eines Mehrwellenextruders, insbesondere eines Ringextruders.

Das Dokument Wobbe H et.al. "Spritzgießen inklusive Compoundieren" in der Zeitschrift Kunststoffe Band 88 (1998), Nr.10, Carl Hanser Verlag München, ISSN 0023-5563, offenbart einen Spritzgieß-Compounder zum Herstellen von zweiteiligen Armlehnen von Gartenstühlen, welcher einen Doppelschneckenextruder und zwei diesem nachgeschaltete Spritzzylinder aufweist, die abwechselnd von dem Doppelschneckenextruder mit Schmelze befüllt werden.

Die DE10156522A1 offenbart eine weitere Ausführungsform eines Spritzgieß-Compounders, wobei zur Aufbereitung und Plastifizierung von Material ein Extruder mit einer oder zwei Extruder-Schnecken verwendet wird. Der Extruder kann auch zwei gleichsinnig rotierende ExtruderSchnecken aufweisen. Die vom Extruder erzeugte Schmelze wird in einen einzigen Spritzzylinder, auch Shot-Pot genannt, befördert und von dort in ein Spritzgießwerkzeug eingespritzt. Ein Zwischenspeicher ermöglicht einen kontinuierlichen Betrieb des Extruders bei intermittierend betriebenem Spritzzylinder.

Ferner ist bei der Verwendung eines Doppelschneckenextruders zur Herstellung von PET-Preforms problematisch, dass die Synchronisation des zyklischen Betriebs einer Spritzgießmaschine und des stetig laufenden Doppelschneckenextruders. Bereits beim Einsatz von Doppelschneckencompoundern im integrierten Injection-Compounder ist erkennbar, dass die Verbindung dieser Maschinen eine Vorratsvorrichtung zwischen Extruder und Shot-Pot erforderlich macht.

Es ist also die Herstellung von PET-Preforms auf Spritzgießmaschinen bekannt, die mit einer Einschnecken als Plastifiziereinheit ausgerüstet sind. Das PET wird dazu über mehrere Stunden auf eine Restfeuchte von ca. 20 ppm vorgetrocknet, in der Einschnecke plastifiziert und zu Preformlingen verspritzt. Müssen Produkte verarbeitet werden, die irgendwelche Zusatzstoffe enthalten, müssen diese in einem vorgeschalteten Compoundierprozess eingearbeitet werden.

Für die Herstellung von Preforms für Milchflaschen, Saftflaschen oder ähnliche Anwendungen, aber auch verschiedene Spritzgussteile müssen diese bestimmte Barriereeigenschaften aufweisen, um eine Veränderung des Inhalts zu verhindern, wie dies bei der Diffusion von Inhaltsstoffen aus den Spritzgussteilen oder aber Eindringen von Stoffen erfolgt. Solche Barriereeigenschaften können beispielsweise als Schutz vor Fotooxidation, UV-Licht oder Sauerstoffeinwirkung dienen. Eine Verarbeitung solcher Zusatzstoffe ist heute nicht oder nicht in ausreichender Qualität auf einem Einschneckenextruder möglich. Es können daher lediglich Produkte für die Anwendung verarbeitet werden, bei denen in einem vorgeschalteten Compoundierschritt diese Einarbeitung durchgeführt wurde. Selbst das Einarbeiten eines 50%igen Titandioxid - TiO₂-PET-Masterbatches - zur Erzielung eines 10%igen TiO₂-Anteils in einer Milchflasche, erforderlich für ausreichende O₂-Barriereeigenschaften, ist wegen der unzureichenden Mischwirkung eines Einschneckenextruders nicht möglich. Pulverförmiges TiO₂, zumindest in der erforderlichen Menge, kann mit einem Einschneckenextruder nicht verarbeitet werden. Eine andere Möglichkeit zum Schutz des Inhalts von solchen Spritzgussteilen besteht in dem Aufbringen einer Barriereschicht in einem zusätzlichen Verarbeitungsschritt. Dies erfordert jedoch zusätzliche Anlagen, ist zeitlich aufwendig und somit kostenintensiv.

Der vorliegenden Erfindung liegt daher die Aufgabe zugrunde, ein Verfahren und eine Vorrichtung zur Herstellung von PET-Preforms, anzugeben, wobei eine energiesparende, platzsparende, materialschonende sowie universell einsetzbare Produktion von PET-Preforms, mit unterschiedlichsten Eigenschaften und mit Barriereeigenschaften ermöglicht ist.

Erfindungsgemäß wird die voranstehende Aufgabe durch ein Verfahren mit den Merkmalen von Patentanspruch 1 und eine Vorrichtung mit den Merkmalen von Patentanspruch 7 gelöst.

Es ist erkannt worden, dass bei Verwendung eines Doppelschneckenextruders mit zweifacher Vakuumextraktion und einem geeigneten Verfahrensteil für die PET-Plastifizierung sowie einer Verbindung der Direktplastifizierung über ein Zwischenteil mit dem Shot-Pot einer PET-Preform-Spritzgießmaschine, eine Herstellung von Spritzgussteilen in besonders guter Qualität ohne eine aufwendige Vortrocknung möglich ist. Hierbei werden einerseits, durch das Entfallen der Vortrocknung, Energiekosten eingespart. Anderseits ist aufgrund der fehlenden Trocknungsanlage ein komprimierter Bau der Vorrichtung möglich, wobei ein niedriger AA-Gehalt der Kunststoffteile ermöglicht ist. Die bei bekannten Anlagen benötigte Energie von etwa 0,55 kWh/kg PET zur Vortrocknung und Plastifizierung können somit durch die erfindungsgemäße Vorrichtung auf etwa 0,26 kWh/kg PET gesenkt werden. Da der Energieverbrauch nach dem Materialverbrauch der zweitgrößte Kostenanteil bei der Herstellung von Preforms ist, kann somit ein erheblicher Kundennutzen erzielt werden.

Die herkömmlichen Vorrichtungen zur Herstellung von Spritzgussteilen, insbesondere von PET-Preforms, weisen Vortrocknungsbehälter auf, die zur Beschränkung der Stellfläche und der isolierten Rohrleitungen über dem Extruder angeordnet sind. Dadurch werden Bauhöhen von 12 bis 15 Metern erreicht. Eine erfindungsgemäße Vorrichtung weist lediglich eine Höhe von 3 bis 4 Metern auf, wodurch die Produktion auch in mehrgeschossigen Gebäuden möglich wird. Zudem ist die lange Dauer der Vortrocknung beim Anfahren herkömmlicher Vorrichtungen zeitraubend und unbequem. Eine erfindungsgemäße Vorrichtung kann fast ohne Vorlaufzeit im wenigen Minuten in Betrieb genommen werden.

Hinsichtlich einer besonders einfachen Ausgestaltung könnte der Doppelschneckenextruder vorzugsweise fünf Prozesszonen aufweisen. Alternativ könnte der Doppelschneckenextruder allerdings auch mehr oder weniger Prozesszonen aufweisen, je nachdem für welche Anwendung die Vorrichtung verwendet wird. In einer, vorzugsweise in der ersten, Prozesszone könnte eine Aufschmelzung des zugefütterten Materials, vorzugsweise zu mindestens 90 %, erfolgen. In dieser Zone könnte dabei das Material, insbesondere ein in Granulatform vorliegendes Material, so schnell wie möglich und schonend erwärmt werden und eine Aufschmelzung des Materials erfolgen.

Ferner könnte zweite und die vierte Prozesszone als Entgasungszone ausgestaltet sein. In dieser Entgasungszone könnte die Schmelze dekomprimiert und auf einer großen Fläche einem ersten Vakuum von beispielsweise weniger als 5 mbar ausgesetzt werden. Hierdurch würde das H₂O und Abbauprodukte, wie der AA-Gehalt, weitgehend, typischerweise zu 80 %, extrahiert werden.

In vorteilhaften Weise könnte mindestens eine, vorzugsweise die dritte, Prozesszone als Beruhigungszone ausgestaltet sein. Zusätzlich oder alternativ könnte in der als Entgasungszone ausgestalteten, vierten Prozesszone, bei der auf einer großen Fläche ein weiteres Vakuum, das typischerweise kleiner als 5 mbar ist, die restlichen flüchtigen Anteile von ca. 20 % extrahiert werden. Es könnte hierbei mindestens eine Vakuumpumpe und Abscheidetechnik vorgesehen sein, die unter Berücksichtigung der extrahierten Oligomere ausgelegt sein könnten.

Weiterhin könnte in vorteilhafter Weise in einer, vorzugsweise in der fünften, Prozesszone eine Komprimierung der Schmelze erfolgen. Es wäre somit eine Druckaufbauzone realisiert, in der die entgaste Schmelze rekomprimiert werden könnte, um dann dem Transferspeicher zugeführt werden zu können.

Im Rahmen einer besonders einfachen Ausgestaltung, könnte der Doppelschneckenextruder unterfüttert sein.

Die Fütterung des Doppelschneckenextruders könnte in besonders einfacher Weise mittels einer gravimetrischen Dosierung erfolgen. Mittels der gravimetrischen Dosierung könnte dann besonders einfach eine Unterfütterung des Doppelschneckenextruders realisiert werden.

Auch könnte der Doppelschneckenextruder in vorteilhafter Weise gleichsinnig drehend ausgestaltet sein. Hinsichtlich eines einfachen Betriebs könnte der Doppelschneckenextruder hierbei kontinuierlich betrieben werden. Im Hinblick auf die Verarbeitung von ungetrocknetem Material, insbesondere von PET, könnte der Doppelschneckenextruder mit hohem Drehmoment bei niedrigen Drehzahlen betreibbar sein.

Überdies könnte in vorteilhafter Weise zwischen dem kontinuierlichen Extrusionsprozess und dem, zyklischen, Spritzgießprozess ein variabler, typischerweise hydraulisch angetriebener Transferspeicher zur Adaption der Betriebsarten angeordnet sein.

Zur Veränderung der Eigenschaften des zu verarbeitenden Materials könnten erfindungsgemäß in einer Prozesszone Zusatzstoffe zur Erreichung von Barriereeigenschaften beimischbar sein. Bei diesen Zusatzstoffen könnte es sich um Füllstoffe, beispielsweise Titandioxid - TiO₂, Talkum, Nanocomposite oder andere Zusatzstoffe handeln, die dazu dienen, die Materialeigenschaften des zu verarbeitenden Materials zu verändern, um beispielsweise einen Schutz vor Photooxidation zu bieten. Ein Beispiel eines solchen Zusatzes sind Oxygen Scavenger, die zur Verbesserung der Barriereeigenschaften zur Verhinderung des Durchtritts von Sauerstoff dient. Ein solcher Oxygen Scavenger ist z.B. auf dem Markt von der Firma ColorMatrix unter dem Namen Amasorb erhältlich. Zusätzlich oder alternativ könnten Additive zugesetzt werden, die z.B. als UV-Stabilisator, als Aufheller oder zur Erhöhung der Viskosität dienen können. Ferner wären Farbzusätze denkbar, die beispielsweise in flüssiger oder in Masterbatch Form vorliegen könnten. Des weiteren wäre der Zusatz von Polyamid - PA - und/oder teilaromatisiertem PA als Aromabarriere möglich. Es sind auch jedwede anderen Stoffe denkbar, die zur Verbesserung der Barriereeigenschaften dienen.

In weiter erfindungsgemäßer Weise wird die Aufgabe durch eine Vorrichtung nach Patentanspruch 7 gelöst, die dadurch gekennzeichnet ist, dass der Extruder als kontinuierlich betreibbarer Doppelschneckenextruder ausgestaltet ist und in einer der Prozesszone Zusatzstoffe zur Erreichung von Barriereeigenschaften beimischbar sind. Durch den Einsatz eines solchen Spritzgießcompounders, der mit kontinuierlich arbeitenden Doppelschnecken, ausgerüstet ist, ergeben sich eine Vielzahl von Vorteilen. Beispielsweise können die Zusatzstoffe problemlos, z.B. auch in Pulverform, in das Material eingearbeitet werden. Zusätzlich ergeben sich weitere Vorteile darin, dass das PET oder ein anderes Material, was anstelle des PET verwendet werden kann, beispielsweise PP - Polypropylen -, welches streckbelastbar ist, PEN - Polyethylenaphthalat -, welches gute Barriereeigenschaften aufweist, oder Kombinationen - PET/PEN Polyethylenterephthalat/Polyethylenaphthalat - oder PET/PA - Polyethylenterephthalat /Polyamid - bzw. PET/EVOH-Blends - Polyethylenterephthalat/Ethylen/Vinylalkohol-Blends - mit wiederum guten Barriereeigenschaften sowie auch amorphe/teilkristalline Rezyklate und Flakes wie auch PLA - Polylactid - vorgetrocknet werden könnten. Die Materialien lassen sich auch in einer erfindungsgemäßen Vorrichtung verwenden, die eine Entgasung, vorzugsweise eine Vakuumentgasung aufweist. Wie bereits beschrieben kann auf eine solche Vortrocknung jedoch verzichtet werden, wenn eine ausreichende Vakuumentgasung vorgesehen ist. Dies würde eine wesentliche Energieeinsparung gegenüber der konventionellen Aufbereitung bedeuten, da auf den Vortrocknungsschritt verzichtet werden kann. Dies wirkt sich bei der Verarbeitung von Rezyklat noch entscheidender aus, da die hierfür verwendeten Trockner aufgrund des geringen Schüttgewichts der Flakes etwa die dreifache Größe aufweisen müssen. Zudem müssen diese Trockner gerührt werden, da die Flakes bei der Vorkristallisierung verkleben würden. Ein zusätzlicher Vorteil wäre, dass auf einen Plastifizierungsschritt komplett verzichtet werden kann.

Weiter vorteilhaft kann die erfindungsgemäße Vorrichtung bei der Verarbeitung von Zusatzstoffen wie Füllstoffen, die beispielsweise, wenn dies gewünscht ist, als Pulver zu dosiert werden können. Bei den Füllstoffen könnte es sich z.B. um TiO₂ - Titanoxid -, Talkum, Nanokomposite oder ähnliche Stoffe handeln, die zum Schutz vor verschiedenen schädigenden Eigenschaften, wie beispielsweise Fotooxidation, zugesetzt werden können. Ferner sind als Zusatzstoffe alle Additive denkbar, die unter anderem als UV-Stabilisator, als Aufheller oder zur Erhöhung der Viskosität oder aber zur Veränderung anderer Eigenschaften dienen können. Ein andere möglicher Zusatzstoff könnten Oxygen-Scavenger, z. B. Amasorp von der Firma ColorMatrix, sein. Möglich wäre auch der Zusatz von PA - Polyamid - oder teilaromatisiertem PA als Aromabarriere. Farbzusätze, flüssig oder als Masterbatch wären somit auch in einfacher Form als Zusatzstoff eindosierbar. Die Plastifizierleistung eines solchen Maschinensystems ist praktisch unbegrenzt, da sie lediglich von der installierten Motorleistung oder dem verwendeten Extruder abhängig ist.

Die Vorteile einer derartigen Vorrichtung liegen somit insbesondere in dem einstufigen Fertigungsverfahren und in der Möglichkeit, beispielsweise pulverförmige aber auch andere Komponenten und ungetrocknete Materialien zu verarbeiten, wobei der damit verbundene Energieverbrauch und somit die Kosten reduziert sind. Außerdem wird das Polymer nur einem Plastifiziervorgang ausgesetzt, was wiederum zu einer geringen Belastung für das Produkt führt. Der erfindungsgemäße Gedanke lässt sich - wie bereits erwähnt - auf andere Verpackungsartikel und andere Verpackungsmaterialien übertragen und ist somit nicht auf PET-Preforms beschränkt.

Für eine besonders effektive Vortrocknung und/oder Entgasung könnte eine der Prozesszonen als Entgasungszonen ausgestaltet sind. In ganz besonders vorteilhafter Weise könnten mindestens zwei Prozesszonen als Entgasungszonen ausgestaltet sind. Somit wäre eine besonders effektive Vortrocknung erreicht. Von besonderem Vorteil wäre es, wenn die Beimischung der Zusatzstoffe zur Erreichung von Barriereeigenschaften des verarbeiteten Materials dient.

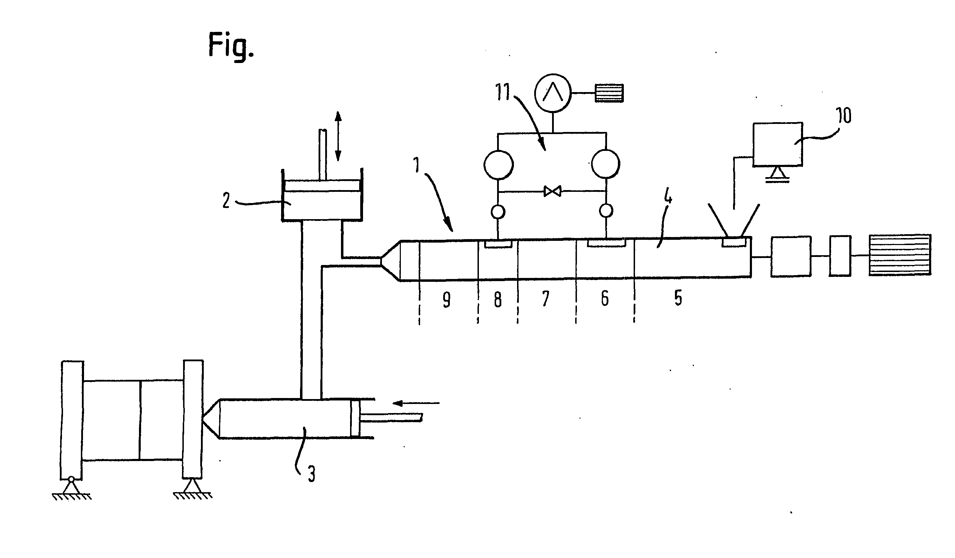

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, und andererseits auf die nachfolgende Erläuterung eines bevorzugten Ausführungsbeispiels der erfindungsgemäßen Vorrichtung zur Herstellung von Spritzgussteilen anhand der Zeichnung zu verweisen. In Verbindung mit der Erläuterung des bevorzugten Ausführungsbeispiels der erfindungsgemäßen Vorrichtung anhand der Zeichnung werden auch im Allgemeinen bevorzugte Ausgestaltungen und Weiterbildungen der Lehre erläutert. In der Zeichnung zeigt die einzige
- Fig.: in einer schematischen Darstellung, ein Ausführungsbeispiel einer erfindungsgemäßen Vorrichtung zur Herstellung von Spritzgussteilen.

Die Vorrichtung zur Herstellung von Spritzgussteilen in dem in der einzigen Figur gezeigten Ausführungsbeispiel dient zur Herstellung von PET-Preforms. Sie weist einen Extruder 1 auf, der zur Aufbereitung und Plastifizierung von in Granulatform befindlichem Material, in diesem Fall Kunststoff, dient. Die Vorrichtung weist ferner einen Transferspeicher 2 zur Aufnahme von aufbereitetem und plastifiziertem Material auf sowie ein Kolbenaggregat 3 zur Weiterverarbeitung des Materials. Insbesondere in der Kombination des Transferspeichers 2 und des Kolbenaggregats 3 ist eine Umsetzung der in kontinuierlicher Form herstellten Schmelze in ein Spritzgussteil möglich.

In erfindungsgemäßer Weise ist der Extruder 1 als Doppelschneckenextruder 4 ausgestaltet und sind mindestens zwei Prozesszonen 6, 8 als Entgasungszonen ausgestaltet.

Der Doppelschneckenextruder 4 weist fünf Prozesszonen 5, 6, 7, 8, 9 auf, wobei in der ersten Prozesszone 5 eine Aufschmelzung des zugefütterten Materials zu mindestens 90 % erfolgt. Die Zufütterung erfolgt in diesem Ausführungsbeispiel durch eine gravimetrische Dosierung 10, welche eine Unterfütterung des Doppelschneckenextruders 4 in besonders einfacher Weise erlaubt.

Die zweite Prozesszone 6 ist als Entgasungszone ausgestaltet, wobei hier an einer großen Fläche ein erstes Vakuum von ca. 5 mbar angelegt ist, welches mittels einer Vakuumpumpe 11 erzeugt wird. Hierdurch werden H₂O und andere Abbauprodukte, z.B. AA, zu ca. 80 %, extrahiert.

Die Kombination der dritten Prozesszone 7 sowie der vierten Prozesszone 8 als Beruhigungs- und Entgasungszone ermöglicht eine weitere Extraktion von flüchtigen Anteilen in einer Höhe von ca. 20 %. Auch hier wird eine Vakuumpumpe zur Erzeugung und zum Anlegen eines zweiten Vakuums von ca. 5 mbar verwendet. Die Vakuumpumpe und die Abscheidetechnik sind unter Berücksichtigung der extrahierten Oligomere ausgelegt.

In diesem Ausführungsbeispiel ist der Doppelschneckenextruder 4 kontinuierlich und gleichsinnig drehend, wobei der Doppelschneckenextruder 4 mit hohem Drehmoment bei niedriger Drehzahl betrieben wird. Mittels des Kolbenaggregats 3 wird das aufgeschmolzene Material in das Preform-Werkzeug eingeschossen.

Hinsichtlich weiterer Details wird zur Vermeidung von Wiederholungen auf die allgemeine Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Extruder
- 2: Transferspeicher
- 3: Kolbenaggregat
- 4: Doppelschneckenextruder
- 5: Prozesszone 1
- 6: Prozesszone 2
- 7: Prozesszone 3
- 8: Prozesszone 4
- 9: Prozesszone 5
- 10: Gravimetrische Dosierung
- 11: Vakuumpumpe

## Patentansprüche

1. Verfahren zur Herstellung von PET-Preforms mit Barriereeigenschaften, wobei ein PET-Material in einem kontinuierlich arbeitenden und mindestens zwei Prozesszonen (5, 6, 7, 8, 9) aufweisenden Doppelschneckenextruder (1) aufbereitet und plastifiziert wird, wobei das aufgeschmolzene PET-Material mittels eines Kolbenaggregats (3) in ein Werkzeug eingeschossen wird, wobei zur Adaption zwischen dem kontinuierlichen Extrusionsprozess und dem zyklischen Spritzgießprozess aufbereitetes und plastifiziertes PET-Material von einem Transferspeicher (2) aufgenommen wird, wobei in einer Prozesszone Zusatzstoffe zur Erreichung von Barriereeigenschaften dem PET-Material beigemischt werden, und wobei das aufgeschmolzene und mit dem Barrierematerial vermischte PET-Material mittels des Kolbenaggregats (3) in ein Preform-Werkzeug eingeschossen wird.

2. Verfahren nach Anspruch 1,
**dadurch gekennzeichnet,**
**dass** Titandioxid, Talkum, Nanocomposite oder Oxygen Scavenger beigemischt wird.

3. Verfahren nach Anspruch 1 oder 2
**dadurch gekennzeichnet,**
**dass** Polyamid und/oder teilaromatisiertes Polyamid beigemischt wird.

4. Verfahren nach einem der Ansprüche 1 bis 3,
**dadurch gekennzeichnet,**
**dass** in einer oder in zwei Prozesszonen (6, 8) eine Entgasung des Materials erfolgt.

5. Verfahren nach einem der Anspruch 4,
**dadurch gekennzeichnet,**
**dass** das Material ohne Vortrocknung aufbereitet und plastifiziert wird.

6. Verfahren nach einem der Ansprüche 1 bis 5,
**dadurch gekennzeichnet,**
**dass** das Material in einem Doppelschneckenextruder (1) aufbereitet und plastifiziert wird, und dass der Doppelschneckenextruder (1) mit hohem Drehmoment bei niedrigen Drehzahlen betrieben wird, wobei der Doppelschneckenextruder (1) vorzugsweise unterfüttert betrieben wird.

7. Vorrichtung zur Herstellung von PET-Preforms mit Barriereeigenschaften, mit einem Extruder (1) zur Aufbereitung und Plastifizierung von PET-Material, mit einem Kolbenaggregat (3) zum Weiterverarbeiten des PET-Materials, und mit einem PET-Preform-Werkzeug, in das das aufgeschmolzene PET-Material, welchem Zusatzstoffe zur Erreichung von Barriereeigenschaften beigemischt worden sind, mittels des Kolbenaggregats (3) eingeschossen wird,
**dadurch gekennzeichnet,**
**dass** der Extruder (1) als kontinuierlich betreibbarer Doppelschneckenextruder ausgestaltet ist, dass der Extruder (1) mindestens zwei Prozesszonen (5, 6, 7, 8, 9) aufweist, dass in einer der Prozesszonen Zusatzstoffe zur Erreichung von Barriereeigenschaften beimischbar sind, und dass zur Adaption des kontinuierlichen Extrusionsprozesses an den zyklischen Spritzgießprozess ein Transferspeicher (2) zur Aufnahme von aufbereitetem und plastifiziertem PET-Material vorgesehen ist.

8. Vorrichtung nach Anspruch 7,
**dadurch gekennzeichnet,**
**dass** eine der Prozesszonen als Entgasungszone ausgestaltet ist.

9. Vorrichtung nach Anspruch 8,
**dadurch gekennzeichnet,**
**dass** mindestens zwei Prozesszonen (6, 8) als Entgasungszonen ausgestaltet sind.

## Claims

1. A method for producing PET preforms with barrier characteristics, wherein a PET material is prepared and plasticized in a continuously operating double-screw extruder (1) having at least two processing zones(5, 6, 7, 8, 9), wherein the melted PET material is shot into a mould by means of a piston unit (3), wherein for the adaption between the continuous extrusion process and the cyclic injection moulding process prepared and plasticized PET material is received by a transfer reservoir (2), wherein in a processing zone additives are admixed to the PET material for the achieving of barrier characteristics, and wherein the melted PET material, mixed with the barrier material, is shot into a preform mould by means of the piston unit (3).

2. The method according to Claim 1,
**characterized in that**
titanium dioxide, talcum, nanocomposite or oxygen scavenger is admixed.

3. The method according to Claim 1 or 2,
**characterized in that**
polyamide and/or partially aromatized polyamide is admixed.

4. The method according to one of Claims 1 to 3,
**characterized in that**
a degassing of the material takes place in one or in two processing zones (6, 8).

5. The method according to one of Claim 4,
**characterized in that**
the material is prepared and plasticized without pre-drying.

6. The method according to one of Claims 1 to 5,
**characterized in that**
the material is prepared and plasticized in a double-screw extruder (1), and that the double-screw extruder (1) is operated at a high torque with low rotation speeds, wherein the double-screw extruder (1) is preferably operated in an underfed manner.

7. A device for the production of PET preforms with barrier characteristics, with an extruder (1) for the preparing and plasticizing of PET material, with a piston unit (3) for the further processing of the PET material, and with a PET preform mould, into which the melted PET material, to which additives have been admixed for achieving barrier characteristics, is shot by means of the piston unit (3),
**characterized in that**
the extruder (1) is configured as a continuously operable double-screw extruder, that the extruder (1) has at least two processing zones (5, 6, 7, 8, 9), that in one of the processing zones additives are able to be admixed for achieving barrier characteristics, and that for adaption of the continuous extrusion process to the cyclic injection moulding process, a transfer reservoir (2) is provided for receiving prepared and plasticized PET material.

8. The device according to Claim 7,
**characterized in that**
one of the processing zones is configured as a degassing zone.

9. The device according to Claim 8,
**characterized in that**
at least two processing zones (6, 8) are configured as degassing zones.

## Revendications

1. Procédé de fabrication de préformes en PET aux propriétés barrière, dans lequel une matière de PET est traitée et plastifiée dans une extrudeuse à double vis (1) fonctionnant en continu et présentant au moins deux zones de procédé (5, 6, 7, 8, 9), sachant que la matière de PET fondue est injectée dans un outil au moyen d'un groupe de pistons (3), sachant que de la matière de PET traitée et plastifiée est prélevée d'un réservoir de transfert (2) pour l'adaptation entre le procédé d'extrusion continu et le procédé de moulage par injection cyclique, sachant que des adjuvants pour obtenir des propriétés barrière sont ajoutés à la matière de PET dans une zone de procédé, et sachant que la matière de PET fondue et mélangée avec le matériau barrière est injectée dans un outil de préforme au moyen du groupe de pistons (3).

2. Procédé selon la revendication 1, **caractérisé en ce que** du dioxyde de titane, du talc, des nanocomposites ou un désoxygénant sont ajoutés.

3. Procédé selon la revendication 1 ou 2, **caractérisé en ce que** du polyamide et/ou du polyamide partiellement aromatisé est ajouté.

4. Procédé selon l'une des revendications 1 à 3, **caractérisé en ce qu'**un dégazage de la matière est effectué dans une ou deux zone(s) de procédé (6, 8).

5. Procédé selon la revendication 4, **caractérisé en ce que** la matière est traitée et plastifiée sans pré-séchage.

6. Procédé selon l'une des revendications 1 à 5, **caractérisé en ce que** la matière est traitée et plastifiée dans une extrudeuse à double vis (1) et que l'extrudeuse à double vis (1) est entraînée avec un couple de rotation élevé à bas régime, sachant que l'extrudeuse à double vis (1) est de préférence entraînée sous-alimentée.

7. Dispositif de fabrication de préformes en PET aux propriétés barrière, comprenant une extrudeuse (1) pour traiter et plastifier de la matière de PET, comprenant un groupe de pistons (3) pour transformer la matière de PET, et un outil de préforme en PET, dans lequel la matière de PET fondue, à laquelle des adjuvants ont été ajoutés pour obtenir des propriétés barrière, est injectée au moyen du groupe de pistons (3), **caractérisé en ce que**
l'extrudeuse (1) est conçue en tant qu'extrudeuse à double vis pouvant fonctionner en continu, que l'extrudeuse (1) présente au moins deux zones de procédé (5, 6, 7, 8, 9), que des adjuvants peuvent être ajoutés dans une des zones de procédé pour obtenir des propriétés barrière, et que pour l'adaptation du procédé d'extrusion en continu au procédé de moulage par injection cyclique, un réservoir de transfert (2) est prévu pour recevoir la matière de PET traitée et plastifiée.

8. Dispositif selon la revendication 7, **caractérisé en ce qu'**une des zones de procédé est conçue en tant que zone de dégazage.

9. Dispositif selon la revendication 8, **caractérisé en ce qu'**au moins deux zones de procédé (6, 8) sont conçues en tant que zones de dégazage.
